# EUROPÄISCHE PATENTSCHRIFT

(11) **EP 0 358 206 B1**
(45) Veröffentlichungstag und Bekanntmachung des Hinweises auf die Patenterteilung: **23.06.1999**
(21) Anmeldenummer: 89116485.7
(22) Anmeldetag: 07.09.1989
(51) Int. Cl.: G01N 21/31, G01N 21/74

(54) **Verfahren und Vorrichtung zur Quecksilberanalyse**
Method and device for the analysis of mercury
Procédé et dispositif pour l'analyse du mercure

(30) Priorität: 08.09.1988 DE 3830504
(43) Veröffentlichungstag der Anmeldung: 14.03.1990
(73) Patentinhaber: BODENSEEWERK PERKIN-ELMER GMBH, D-88662 Überlingen (DE)
(72) Erfinder: Huber, Bernhard, 88662 Überlingen/Bodensee (DE)
(74) Vertreter: Grünecker, Kinkeldey, Stockmair & Schwanhäusser Anwaltssozietät

(56) Entgegenhaltungen:
- FR-A- 2 359 412
- US-A- 3 933 431
- ANALYST, Band 102, Nr. 1214, Mai 1977, Seiten 399-403; R.A. NICHOLSON: "Rapid thermal-decomposition technique for the atomic-absorption determination of mercury in rocks, soils and sediment"
- JOURNAL OF HIGH RESOLUTION CHROMATOGRAPHY AND CHROM. COMMUNICATIONS, Band 5, Nr. 7, Juli 1982, Seite 382-384, Heidelberg, DE; H.J. NEU et al.: "A novel technique for thermal desorption from active charcoal"
- ATOMIC ABSORPTION NEWSLETTER, Band 14, Nr. 6, November-Dezember 1975, Seiten 151,152, Norwalk, Conneticut, US; J. MURPHY: "Determination of mercury in coals by peroxide digestion and cold vapor atomic absorption spectrophotometry"

## Beschreibung

### Technisches Gebiet

Die Erfindung betrifft ein Verfahren zur Analyse von Substanzen auf Quecksilber durch Messen der Atomabsorption, mit den Verfahrensschritten
(a) Austreiben des Quecksilbers aus der Substanz,
(b) Transportieren des entstehenden Quecksilberdampfes mit einem Trägergasstrom durch Leitungsmittel mit einem Quarzrohr, der einen Körper großer Oberfläche aus einem das Quecksilber bei niedrigen Temperaturen bindenden und bei höheren Temperaturen wieder abgebenden Material enthält,
(c) anschließendes Erhitzen des den Körper enthaltenden Quarzrohrs, zum Wiederfreisetzen des auf der Oberfläche des Körpers angereicherten Quecksilbers,
(d) Transportieren des so freigesetzten Quecksilberdampfes durch den Trägergasstrom in eine Meßküvette eines Atomabsorptions-Photometers, und
(e) Abkühlen des Quarzrohrs nach dem Erhitzen durch eine direkt auf das Quarzrohr einwirkende Kühlmittelströmung.

Die Erfindung betrifft auch eine Vorrichtung zur automatischen Durchführung eines solchen Verfahrens, mit
(a) Austreibmitteln zum Austreiben von Quecksilber aus einer Substanz zur Erzeugung von Quecksilberdampf,
(b) Leitungsmitteln, die mit den Austreibmitteln verbunden und zu einer Meßküvette geführt sind, wobei ein Trägergas durch die Austreibmittel und durch die Leitungsmittel und die Meßküvette hindurchleitbar ist, so daß der gebildete Quecksilberdampf durch die Leitungsmittel transportiert wird,
(c) einem in dem Strömungsquerschnitt eines Quarzrohrs der Leitungsmittel angeordneten Körper großer Oberfläche aus einem das Quecksilber bei niedrigen Temperaturen bindenden und bei höheren Temperaturen wieder abgebenden Material,
(d) einer Heizeinrichtung zum wahlweisen Erhitzen des Quarzrohrs mit dem darin enthaltenen Körper, und
(e) einer eine Kühlmittelleitung umfassenden Kühleinrichtung zum anschließenden Abkühlen des Quarzrohrs mit den darin enthaltenen Körper mittels einer direkt auf das Quarzrohr einwirkenden Kühlmittelströmung.

### Zugrundeliegender Stand der Technik

Durch die JP-Z-Eisei Kagaku 29(6), 418-22, ist es bekannt, zur Bestimmung von Quecksilber in organischen Proben das Quecksilber durch Erhitzen der Proben zu verdampfen. Der Quecksilberdampf wird durch eine Waschlösung geleitet und als Goldamalgam angereichert. Das Goldamalgam wird dann erhitzt und das Quecksilber freigesetzt. Der so erhaltene Quecksilberdampf wird optisch gemessen.

Ein ähnliches Verfahren zur Messung der Konzentration von Quecksilber in Gesteinen ist beschrieben in "Analytica Chimica Acta" 78(2), 479-82.

In der Veröffentlichung von R. A. Nicholson in ANALYST, Band 102, Nr. 1214, Mai 1977, Seiten 399-403, werden ein Verfahren und eine Vorrichtung zur Quecksilberbestimmung in Gesteinen beschrieben, bei dem das durch thermische Zersetzung erzeugte, quecksilberhaltige Gas durch einen Trägergasstrom in ein Rohr mit verschiedenen Adsorbentien geleitet und das Quecksilber schließlich in einem Rohrteil an Gold durch Amalgambildung niedergeschlagen wird. Während der Amalgambildung befindet sich dieser Rohrteil in einer Kühlschlange mit Wasserkühlung. Anschließend wird das Rohr so verschoben, daß sich das Rohrteil mit dem Gold und dem daran gebildeten Amalgam in einem Heizofen befindet. Die Temperatur des Heizofens ist so eingestellt, daß sich das Amalgam zersetzt. Der freigesetzte Quecksilberdampf wird dann durch einen Trägergasstrom der Meßzelle eines Atomabsorptions-Spektrometers zugeführt.

In der Veröffentlichung von J. Murphy in ATOMIC ABSORPTION NEWSLETTER, Band 14, Nr. 6, November - Dezember 1975, Seiten 151 und 152, wird eine Quecksilberbestimmung in durch Wasserstoffperoxid aufgeschlossenen Kohleproben beschrieben. Die aufgeschlossene Probe wird mit Reduktionsmitteln umgesetzt und das freigesetzte Quecksilber wird in einem Trägergas aus Argon aufgenommen und in einem Rohrteil eines Leitungssystems durch Amalgambildung an Silberwolle niedergeschlagen. Das Rohrteil wird anschließend durch einen Gasbrenner beheizt und der freigesetzte Quecksilberdampf durch einen Trägergasstrom der Meßzelle eines Atomabsorptions-Spektrometers zugeführt. Nach der Messung wird der Gasbrenner abgestellt und das Rohrteil durch den weiter fließenden Argonstrom und schließlich durch Auflegen eines nassen Tuchs abgekühlt.

Nach der FR-A-2 359 412 wird eine Spurenbestimmung von Quecksilber in Erdgas dadurch vorgenommen, daß das Erdgas durch Fallen geleitet wird, die eine Temperatur unter 50oC haben und Goldwolle enthalten, an der das Queckesilber durch Amalgambildung niedergeschlagen wird. Die Fallen aus Stahlrohr sind mit einer Heizwicklung versehen und werden zur Freisetzung von Quecksilberdampf auf ca. 400oC erhitzt, wobei der Quecksilberdampf in einen Trägergasstrom aufgenommen und der Meßzelle eines Atomabsorptions-Spektrometers zugeführt wird. Nach der Messung wird die Heizung abgeschaltet, und die Falle und die Heizwicklung werden durch einen Luftstrom gekühlt, der durch einen Ventilator erzeugt wird.

Durch die US-A-3 933 431 ist ein Verfahren zur Quecksilberbestimmung mit einem Adsorptionsrohr bekannt, in dem metallisches Quecksilber, Quecksilberdampf und organische Quecksilberverbindungen adsorbiert werden. Die adsorbierten Bestandteile werden in einer Desorptionseinheit desorbiert und entweder direkt oder nach thermischer Zersetzung und Niederschlagung des Quecksilberdampfes an einem Amalgambildner (Goldkörner in feinem Seesand) durch Messung der Atomabsorption bestimmt. Die Desorptionseinheit enthält ein den Amalgambildner aufnehmendes Rohrteil, das mit einer Heizwicklung versehen ist. Das Rohrteil mit dem Amalgambildner wird erhitzt und der freigesetzte Quecksilberdampf von einem Trägergasstrom aufgenommen. Das Rohrteil und die Heizwicklung sind von einem Kühlmantel umgeben, durch den nach der Messung ein Kühlluftstrom geleitet wird.

Aus der Druckschrift "Journal of High Resolution Chromatography and Chrom. Communications", Band 5, Nr. 7, Juli 1982, Seiten 382-384, Heidelberg, DE, H.J. Neu et al. "A novel Technique for Thermal Desorption from Active Charcoal" ist ein Verfahren und eine Vorrichtung bekannt, in durch Gaschromatographie nachzuweisende Proben in Aktivkohle adsorbiert und zum Nachweis durch Wärmeeinwirkung aus der Aktivkohle ausgetrieben werden. Zum schnellen Aufheizen der Aktivkohle wird eine Mikrowellenheizeinrichtung verwendet.

### Offenbarung der Erfindung

Der Erfindung liegt eine Aufgabe zugrunde, bei einem Verfahren und einer Vorrichtung der eingangs definierten Art die Analysenfrequenz zu erhöhen.

Nach dem erfindungsgemäßen Verfahren wird diese Aufgabe dadurch gelöst,
(f) daß zum Erhitzen des den Körper enthaltenden Quarzrohrs ein Infrarotstrahler verwendet wird,
(g) daß zwischen dem Infrarotstrahler 56 und dem Quarzrohr eine den Infrarotstrahler gegen das Quarzrohr abschirmende, für die Infrarotstrahlung durchlässige Trennwand 62 angeordnet wird, und
(h) daß zur Erzeugung des Kühlmittelstroms gegen die Rohrwand des Quarzrohrs ein Kühlmittelstrahl gerichtet wird.

Hinsichtlich der erfindungsgemäßen Vorrichtung wird die vorgenannte Aufgabe dadurch gelöst,
(f) daß als Heizeinrichtung ein das Quarzrohr mit dem darin enthaltenen Körper 28 beheizender Infrarotstrahler vorgesehen ist,
(g) daß zwischen dem Infrarotstrahler und dem Quarzrohr eine den Infrarotstrahler gegen das Quarzrohr abschirmende, für die Infrarotbestrahlung durchlässige Trennwand 62 angeordnet ist, und
(h) daß die Kühlmittelleitung eine Kühlmittelstrahl-Austrittsöffnung 40 für einen gegen die Rohrwand des Quarzrohrs gerichteten Kühlmittelstrahl aufweist.

Vorteilhafterweise ist der Körper großer Oberfläche ein spiralig aufgerolltes Netz, das einen Querschnitt des Quarzrohrs weitgehend gleichmäßig aufüllenden, aber den Durchtritt der Gase gestattenden Propfen bildet. Das Netz kann ein Goldnetz sein, das mit dem Quecksilber ein Amalgam bildet.

Ein Analysenvorrichtung in Verbindung mit einem Ausführungsbeispiel der Erfindung ist nachstehend unter Bezugnahme auf die zugehörigen Zeichnungen näher erläutert.

### Kurze Beschreibung der Zeichnungen

- Fig. 1: ist eine schematische Darstellung einer Vorrichtung zur Durchführung von Reihenanalysen auf Quecksilber.
- Fig. 2: zeigt eine Heizeinrichtung, die in einer erfindungsgemäßen Vorrichtung zur Durchführung von Reihenanalysen auf Quecksilber verwendbar ist.

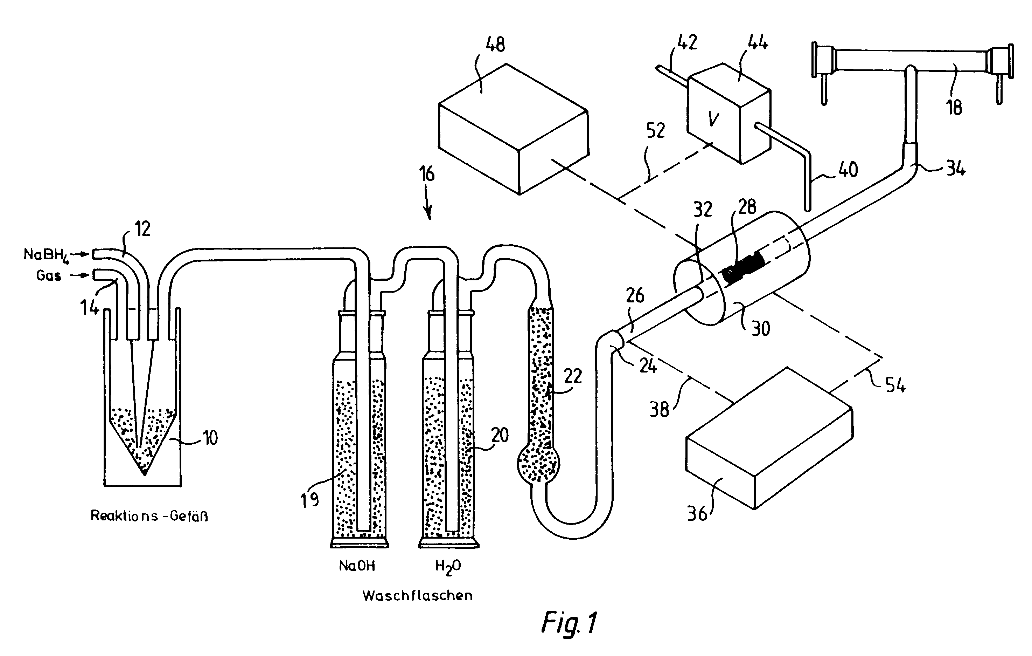

In Fig. 1 ist mit 10 ein Reaktionsgefäß bezeichnet. In das Reaktionsgefäß wird ein quecksilberhaltige Probenlösung eingebracht, die auf Quecksilber analysiert werden soll. Zu diesem Zweck wird der Probenlösung über einen Anschluß 12 Natriumborhydrid zugesetzt. Das treibt Quecksilber aus der Probenlösung aus. Das Austreiben des Quecksilbers aus der Probenlösung kann auch durch Erhitzen einer u.U. festen Probe erfolgen. Es entsteht Quecksilberdampf. Der Quecksilberdampf wird durch ein Transportgas, das über einen Anschluß 14 zugeführt wird, über Leitungsmittel 16 schließlich zu einer AAS-Meßküvette 18 transportiert. Die Meßküvette wird in bekannter und daher nicht dargestellter Weise von einem Meßlichtbündel eines Atomabsorptions-Spektralphotometers durchsetzt. Das Meßlichtbündel enthält ein Linienspektrum mit den charakteristischen Resonanzlinien des Quecksilbers. Die Schwächung des Meßlichtbündels in der Meßküvette ist daher ein Maß für die Menge an Quecksilber in der Meßküvette 18.

Bei der beschriebenen Vorrichtung erfolgt jedoch noch eine Anreicherung des Quecksilbers, bevor die Messung in der Meßküvette erfolgt. Zu diesem Zweck strömt der Quecksilberdampf mit dem Transportgas zunächst durch zwei Waschflaschen, nämlich eine Waschflasche 19 mit Natronlauge und eine Waschflasche 20 mit Wasser. Anschließend werden die Gase in einem Trockenrohr 22 getrocknet. Die gewaschenen und getrockneten Gase treten über ein flexibles Verbindungsstück 24 in ein Quarzrohr 26.

In dem Quarzrohr 26 sitzt ein Körper 28 mit großer Oberfläche aus einem Material, das bei niedrigeren Temperaturen Quecksilber an seiner Oberfläche bindet und das Quecksilber bei höheren Temperaturen wieder abgibt. Zu diesem Zweck ist der Körper aus einem amalgambildenden Material, und zwar aus Gold. Der Körper 28 ist ein Goldnetz. Dieses Goldnetz ist spiralig zu einem Pfropfen gewickelt, der in das Quarzrohr 26 eingeschoben ist. Der von dem Goldnetz gebildete Pfropfen überdeckt gleichmäßig den gesamten Strömungsquerschnitt des Quarzrohres 26.

Dabei ist natürlich eine Gasströmung durch des Quarzrohr 26 und zwischen den einzelnen Lagen des Goldnetzes hindurch mögilch. Bei Raumtemperatur bildet das Quecksilber mit dem Gold an der Oberfläche des Körpers 28 ein Amalgam. Das Quecksilber wird an der Oberfläche des Körpers 28 praktisch vollständig gebunden und auf diese Weise angereichert. Wenn der Körper 28 erhitzt wird, zersetzt sich das Amalgam, und das Quecksilber wird wieder abgegeben. Die Strömung von Transportgas transportiert das abgegebene Quecksilber in die Meßküvette 18. Wegen der Anreicherung und schnellen Abgabe des Quecksilbers ergibt sich in der Meßküvette 18 eine erhöhte Konzentration des Quecksilbers und damit eine erhöhte Empfindlichkeit, wenn das Quecksilber in der Probenlösung nur in geringer Konzentration enthalten ist.

In einer Ausführung, die nicht Teil der Erfindung ist, wird zum Aufheizen des Körpers 28 ein mantelförmiger Ofen 30 mit einem geraden Längskanal 32 vorgesehen. Durch diesen Längskanal 32 erstreckt sich das Quarzrohr 26. Das Quarzrohr 25 ist auch durch eine flexible Verbindung 34 mit der Meßküvette verbunden.

Neben dem Ofen 30, der nicht Teil der Erfindung ist, befindet sich eine Kühlmittel-Strahlöffnung 40 in Form eines Rohres, das gegen das Quarzrohr 26 gerichtet ist. Die Kühlmittel-Strahlöffnung befindet sich an der Stelle, an welcher der Körper 28 sich befindet. Über die Kühlmittel-Strahlöffnung 40 kann ein flüssiges oder gasförmiges Kühlmittel gegen das Quarzrohr geblasen werden. Das Kühlmittel wird über einen Anschluß 42 von einer geeigneten Kühlmittelquelle zugeführt. Der Kühlmittel-Strom wird von einem Ventil 44 beherrscht.

Das Ventil 44 und der Stellmechanismus 36 sind durch ein Steuergerät 48 steuerbar, wie durch die gestrichelten Linien 52 und 54 angedeutet ist.

Die beschriebene Anordnung arbeitet wie folgt:

Aus der Probe wird zunächst das Quecksilber ausgetrieben. Der Quecksilberdampf wird von dem Transportgas mitgenommen.

Dabei ist der Körper 28 auf einer relativ niedrigen Temperatur. Dadurch wird das Quecksilber beim Durchströmen der Gase durch das Goldnetz des Körpers 28 auf dessen Oberfläche als Amalgam gebunden. Das Quecksilber wird auf dem Körper 28 angereichert.

Wenn diese Anreicherung erfolgt ist, wird in einem nächsten Schritt der Körper 28 sehr schnell aufgeheizt. Durch die Aufheizung wird das Amalgam zersetzt und das Quecksilber wieder freigesetzt. Der ständig weiterfließende Strom von Transportgas transportiert den entstehenden Quecksilberdampf zur Meßküvette 18. Durch die Anreicherung und die schnelle Freisetzung des Quecksilbers ergibt sich dabei in der Meßküvette eine hohe Konzentration von Quecksilber. Die Temperatur des Körpers 28 steigt sehr schnell an. Das Quecksilber wird schlagartig freigesetzt. Das gibt eine kurze aber hohe Konzentrationsspitze in der Meßküvette.

Nach der Messung und dem Ausheizen befindet sich der Körper (28) unter der Kühlmittel-Strahlöffnung 40. Die Steuervorrichtung 48 Steuert das Ventil 44 auf. Damit wird ein Strahl von flüssigem oder gasförmigem Kühlmittel, etwa Wasser oder Druckluft, auf das Quarzrohr im Bereich des Körpers 28 geleitet. Dadurch wird der Körper 28 schnell wieder abgekühlt, so daß die nächste Analyse in der beschriebenen Weise stattfinden kann.

Die Analysenzeit wird hier durch zwei Maßnahmen verkürzt: Einmal entfällt die Zeit, die zum Aufheizen benötigt wird. Zum anderen erfolgt nach dem Ausheizen eine schnelle Wiederabkühlung des Körpers. Ein weiterer Vorteil der beschriebenen Anordnung ist die Erhöhung der zu messenden Konzentration infolge des schnelleren Aufheizens des Körpers 28.

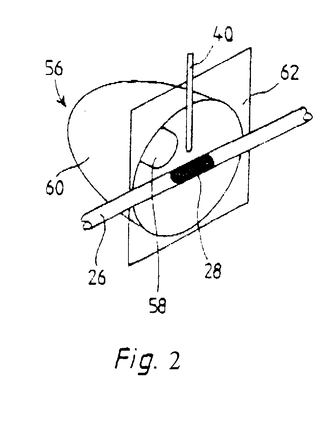

Fig. 2 zeigt einen Teil einer erfindungsgemäßen Ausführung der Analysenvorrichtung worin ein Infrarotstrahler mit einer Lichtquelle 58 in einem Reflektor 60 vorgesehen ist. Der Reflektor 60 sammelt die Strahlung von der Lichtquelle 58 auf dem Körper 28. Dadurch kann der Körper 28 stark aufgeheizt werden. Das Quarzrohr 26 ist hier stillstehend. Zum Aufheizen und Abkühlen wird die Lichtquelle 58 ein- und ausgeschaltet. Das ist wegen der relativ geringen Wärmekapazität der Lichtquelle 58 möglich. Zwischen dem Strahler 56 einerseits und dem Quarzrohr 26 und der Kühlmittel-Strahlöffnung 40 andererseits ist eine infrarotdurchlässige Trennwand 62 vorgesehen. Die Trennwand schützt den Strahler 56 vor dem Kühlmittel.

## Patentansprüche

1. Verfahren zur Analyse von Substanzen auf Quecksilber durch Messen der Atomabsorption, mit den Verfahrensschritten
(a) Austreiben des Quecksilbers aus der Substanz,
(b) Transportieren des entstehenden Quecksilberdampfes mit einem Trägergasstrom durch Leitungsmittel (16) mit einem Quarzrohr (26), das einen Körper (28) großer Oberfläche aus einem das Quecksilber bei niedrigen Temperaturen bindenden und bei höheren Temperaturen wieder abgebenden Material enthält,
(c) anschließendes Erhitzen des den Körper (28) enthaltenden Quarzrohrs (26) zum Wiederfreisetzen des auf der Oberfläche des Körpers angereicherten Quecksilbers,
(d) Transportieren des so freigesetzten Quecksilberdampfes durch den Trägergasstrom in eine Meßküvette (18) eines Atomabsorptions-Photometers, und
(e) Abkühlen des Rohrteils (26) nach dem Erhitzen durch eine direkt auf das Quarzrohr (26) einwirkende Kühlmittelströmung,
**dadurch gekennzeichnet,**
(f) daß zum Erhitzen des den Körper (28) enthaltenden Quarzrohrs (26) ein Infrarotstrahler (56) verwendet wird,
(g) daß zwischen dem Infrarotstrahler (56) und dem Quarzrohr (26) eine den Infrarotstrahler gegen das Quarzrohr abschirmende, für die Infrarotstrahlung durchlässige Trennwand (62) angeordnet wird, und
(h) daß zur Erzeugung der Kühlmittelströmung gegen die Rohrwand des Quarzrohrs (26) ein Kühlmittelstrahl gerichtet wird.

2. Vorrichtung zur Durchführung des Verfahrens nach Anspruch 1 mit:
(a) Austreibmitteln (10) zum Austreiben von Quecksilber aus einer Substanz zur Erzeugung von Quecksilberdampf,
(b) Leitungsmitteln (16), die mit den Austreibmitteln (10) verbunden und zu einer Meßküvette (18) geführt sind, wobei ein Trägergas durch die Austreibmittel (10) und durch die Leitungsmittel (16) und die Meßküvette (18) hindurchleitbar ist, so daß der gebildete Quecksilberdampf durch die Leitungsmittel (16) transportiert wird,
(c) einem in dem Strömungsquerschnitt eines Quarzrohrs (26) der Leitungsmittel (16) angeordneten Körper (28) großer Oberfläche aus einem das Quecksilber bei niedrigen Temperaturen bindenden und bei höheren Temperaturen wieder abgebenden Material,
(d) einer Heizeinrichtung (56) zum wahlweisen Erhitzen des Quarzrohrs (26) mit dem darin enthaltenen Körper (28), und
(e) einer eine Kühlmittelleitung umfassenden Kühleinrichtung zum anschließenden Abkühlen des Quarzrohrs (26) mit dem darin enthaltenen Körper (28) mittels einer direkt auf das Quarzrohr (26) einwirkenden Kühlmittelströmung,
**dadurch gekennzeichnet,**
(f) daß als Heizeinrichtung ein das Quarzrohr (26) mit dem darin enthaltenen Körper (28) beheizender Infrarotstrahler (56) vorgesehen ist,
(g) daß zwischen dem Infrarotstrahler (56) und dem Quarzrohr (26) eine den Infrarotstrahler gegen das Quarzrohr abschirmende, für die Infrarotstrahlung durchlässige Trennwand (62) angeordnet ist, und
(h) daß die Kühlmittelleitung eine Kühlmittelstrahl-Austrittsöffnung (40) für einen gegen die Rohrwand des Quarzrohrs (26) gerichteten Kühlmittelstrahl aufweist.

3. Vorrichtung nach Anspruch 2, **dadurch gekennzeichnet,** daß der Körper (28) großer Oberfläche ein spiralig aufgerolltes Netz aufweist, das einen den Querschnitt des Quarzrohrs (26) weitgehend gleichmäßig ausfüllenden, aber den Durchtritt der Gase gestattenden Pfropfen bildet.

4. Vorrichtung nach Anspruch 3, **dadurch gekennzeichnet,** daß das Netz ein Goldnetz ist.

## Claims

1. A method of analysing substances for mercury by measuring the atomic absorption, comprising the following steps:
(a) expelling the mercury from the substance,
(b) conveying the resulting mercury vapour in a stream of carrier gas through piping means (16) comprising a quartz tube (26) containing a body (28) having a large surface area and made of a material which binds mercury at low temperatures and releases it at higher temperatures,
(c) subsequently heating the quartz tube (26) containing the body (28) in order to release the mercury concentrated on the surface of the body,
(d) conveying the released mercury vapour in the stream of carrier gas to a measuring cell (18) of an atomic absorption photometer, and
(e) cooling the quartz tube (26) after heating, by means of a flow of coolant acting directly on the quartz tube (26),
characterised in that
(f) an infrared radiator (56) is used for heating the quartz tube (26) containing the body (28),
(g) a partition (62) permeable to infrared radiation and screening the infrared radiator (56) from the quartz tube (26) is placed between the infrared radiator (56) and the quartz tube, and
(h) in order to generate the flow of coolant, a jet of coolant is directed against the wall of the quartz tube (26).

2. A device for working the method according to claim 1, comprising
(a) expulsion means (10) for expelling mercury from a substance for generating mercury vapour,
(b) piping means (16) connected to the expulsion means (10) and leading to a measuring cell (18), a carrier gas being conveyable through the expulsion means (10) and through the piping means (16) and the measuring cell (18), so that the mercury vapour formed is conveyed through the piping means (16),
(c) a body (28) having a large surface area, disposed in the flow cross-section of a quartz tube (26) forming part of the piping means (16) and made of a material which binds mercury at low temperatures and releases it at higher temperatures,
(d) a heating device (56) for heating the quartz tube (26) and the body (28) therein when required, and
(e) a cooling device comprising a coolant line for subsequently cooling the quartz tube (26) and the body (28) therein by means of a flow of coolant acting directly on the quartz tube (26),
characterised in that
(f) the heating device is an infrared radiator (56) which heats the quartz tube (26) and the body (28) inside it,
(g) a partition (62) permeable to infrared radiation and screening the infrared radiator (56) from the quartz tube (26) is placed between the infrared radiator (56) and the quartz tube (26), and
(h) the coolant line has an outlet opening (40) for a jet of coolant directed against the wall of the quartz tube (26).

3. A device according to claim 2, characterised in that the body (28) having a large surface area comprises a net rolled in a spiral and forming a plug which substantially uniformly fills the cross-section of the quartz tube (26) but allows gases to pass through.

4. A device according to claim 3, characterised in that the net is a gold net.

## Revendications

1. Procédé pour l'analyse du mercure dans des substances par mesure de l'absorption atomique, comprenant les étapes suivantes
(a) expulsion du mercure de la substance,
(b) transport de la vapeur de mercure obtenue, par un flux de gaz porteur, à travers un système de conduites (16) comprenant un tube en quartz (26) qui contient un corps (28) de grande surface en un matériau liant le mercure à basse température et le cédant à nouveau à plus haute température,
(c) chauffage consécutif du tube en quartz (26) contenant le corps (28), pour libérer à nouveau le mercure accumulé sur la surface du corps,
(d) transport de la vapeur de mercure ainsi libérée, par le flux de gaz porteur, dans une cuvette de mesure (18) d'un photomètre d'absorption atomique, et
(e) après le chauffage, refroidissement du tube en quartz (26) par un flux de réfrigérant agissant directement sur le tube en quartz (26),
**caractérisé**
(f) en ce qu'on utilise un radiateur à infrarouge (56) pour le chauffage du tube en quartz (26) contenant le corps (28),
(g) en ce qu'on dispose, entre le radiateur à infrarouge (56) et le tube en quartz (26), une cloison de séparation (62) laissant passer le rayonnement infrarouge et protégeant le radiateur à infrarouge vis-à-vis du tube en quartz,
(h) et en ce que, pour produire le flux de réfrigérant, un jet de réfrigérant est dirigé sur la paroi du tube en quartz (26).

2. Dispositif pour la mise en oeuvre du procédé selon la revendication 1, comprenant
(a) des moyens d'expulsion (10) pour expulser du mercure d'une substance afin de produire de la vapeur de mercure,
(b) un système de conduites (16), qui est relié aux moyens d'expulsion (10) et mène à une cuvette de mesure (18), un gaz porteur pouvant être dirigé à travers les moyens d'expulsion (10), le système de conduites (16) et la cuvette de mesure (18), de sorte que la vapeur de mercure formée est transportée à travers le système de conduites (16),
(c) un corps (28) de grande surface, disposé dans la section d'écoulement d'un tube en quartz (26) du système de conduites (16) et réalisé en un matériau liant le mercure à basse température et le cédant à nouveau à plus haute température,
(d) un dispositif de chauffage (56) pour chauffer sélectivement le tube en quartz (26) et le corps (28) contenu dans ce tube, et
(e) un dispositif de refroidissement comprenant une conduite de refroidissement, pour le refroidissement consécutif du tube en quartz (26), et du corps (28) contenu dans ce tube, au moyen d'un flux de réfrigérant agissant directement sur le tube en quartz (26),
**caractérisé**
(f) en ce qu'un radiateur à infrarouge (56), chauffant le tube en quartz (26) et le corps (28) contenu dans ce tube, est prévu comme dispositif de chauffage,
(g) en ce qu'une cloison de séparation (62), laissant passer le rayonnement infrarouge et protégeant le radiateur à infrarouge vis-à-vis du tube en quartz, est disposée entre le radiateur à infrarouge (56) et le tube en quartz (26),
(h) et en ce que la conduite de réfrigérant présente une ouverture de sortie (40) de jet de réfrigérant, pour un jet de réfrigérant dirigé sur la paroi du tube en quartz (26).

3. Dispositif selon la revendication 2, **caractérisé** en ce que le corps (28) de grande surface consiste en un maillage enroulé en spirale, qui constitue un bouchon remplissant pour l'essentiel uniformément la section du tube en quartz (26), mais autorisant le passage des gaz.

4. Dispositif selon la revendication 3, **caractérisé** en ce que le maillage est un maillage en or.
